# EUROPÄISCHE PATENTSCHRIFT

(11) **EP 2 533 020 B1**
(45) Veröffentlichungstag und Bekanntmachung des Hinweises auf die Patenterteilung: **17.12.2014**
(21) Anmeldenummer: 11405267.3
(22) Anmeldetag: 10.06.2011
(51) Int. Cl.: G01D 5/347, G01D 5/244, G01D 5/245

(54) **Lineares Wegmesssystem und Verfahren zum Bestimmen einer absoluten Position eines Laufschlittens entlang einer Laufschiene**
Linear distance measuring system and method for determining the absolute position of a slide along a guide rail
Système de mesure de trajectoire linéaire et procédé de détermination d'une position absolue d'une glissière le long d'un rail de guidage

(43) Veröffentlichungstag der Anmeldung: 12.12.2012
(73) Patentinhaber: Schneeberger Holding AG, 4914 Roggwil (CH)
(72) Erfinder: Frey, Stefan, 72226 Simmersfeld (DE); Götz, Klaus-Dieter, 74372 Sersheim (DE)
(74) Vertreter: EGLI-EUROPEAN PATENT ATTORNEYS

(56) Entgegenhaltungen:
- EP-A2- 1 978 633
- WO-A2-03/058172

## Beschreibung

Die Erfindung betrifft ein lineares Wegmesssystem nach Patentanspruch 1 und ein Verfahren zum Bestimmen einer absoluten Position eines Laufschlittens entlang einer Laufschiene nach Patentanspruch 8.

Systeme zum Bestimmen einer Position der vorstehend genannten Art werden beispielsweise in Kombination mit Führungssystemen, z.B. Linearführungen, verwendet, welche einen ersten Körper und einen relativ zum ersten Körper bewegbaren, an dem ersten Körper geführten zweiten Körper umfassen, und haben dabei die Aufgabe, eine Bestimmung der Position des zweiten Körpers relativ zum ersten Körper zu ermöglichen. Zu diesem Zweck können beispielsweise eine Messskala der jeweiligen Vorrichtung zur Bestimmung einer Position ortsfest relativ zum ersten Körper und eine jeweilige Abtastvorrichtung ortsfest relativ zum zweiten Körper angeordnet sein.

Es sind beispielsweise lineare Wegmesssysteme zur Bestimmung einer absoluten Position bekannt, welche die Messskala mit darauf aufgetragenen Messpunkten und eine relativ zur Messskala bewegbare Abtastvorrichtung zum Abtasten der jeweiligen Messpunkte umfassen. Diese Messpunkte sind beispielsweise durch eine oder mehrere erfassbare Markierungen zur Kennzeichnung einer Position gebildet. Die Markierungen können beispielsweise optisch oder magnetisch erfasst werden.

Bei der optischen Abtastung umfasst die Abtastvorrichtung einen Sensor zum Erfassen eines Bildes der Messpunkte und zum Bereitstellen von Signalen, welche eine Bestimmung der Position der Abtastvorrichtung relativ zur Messskala ermöglichen. Bei der magnetischen Abtastung umfasst die Abtastvorrichtung einen Magnetfeldsensor zum Erfassen eines Magnetfeldverlaufes von einzelnen Permanentmagneten, welche in diesem Fall die Messpunkte der Messskala ausbilden.

In Abhängigkeit von der jeweiligen Messskala (optisch/magnetisch) können derartige Systeme beispielsweise verwendet werden, um eine relative Veränderung einer Position der Abtastvorrichtung in Relation zu einer Ausgangsposition zu messen oder eine absolute Position der Abtastvorrichtung zu registrieren.

Um zu erreichen, dass derartige Systeme relative Veränderungen der Position der Abtastvorrichtung bezüglich der Messskala messen können, kann die jeweilige Messskala beispielsweise als inkrementale Skala ausgebildet sein und dementsprechend eine Folge von mehreren identischen, periodisch angeordneten Markierungen umfassen, welche in gleichen Abständen längs einer vorgegebenen Linie, bzw. Messskala angeordnet sind. Um beispielsweise eine optische Abtastung einer derartigen inkrementalen Messskala zu ermöglichen, kann die Abtastvorrichtung ein optisches Bild der jeweiligen Markierungen auf einen Sensor in Form eines fotoelektrischen Detektors projizieren. Um relative Veränderungen der Position der Abtastvorrichtung bezüglich der Messskala zu messen, wird die Abtastvorrichtung entlang der Spur der Markierungen bewegt. Die Bewegung der Abtastvorrichtung resultiert dabei in einer periodischen Veränderung eines Signals, welche beispielsweise Aufschluss gibt über die Anzahl der Markierungen, an welchen die Abtastvorrichtung vorbeibewegt wurde.

Weiterhin können Signale, welche für verschiedene Positionen der Abtastvorrichtung entlang der Spur der Markierungen registriert wurden, interpoliert werden, sodass es möglich ist, die Position der Abtastvorrichtung relativ zu den Markierungen mit einer Ungenauigkeit zu bestimmen, welche kleiner als der Abstand benachbarter Markierungen ist.

Zusammengefasst, kann die jeweilige Änderung der relativen Position der Abtastvorrichtung durch Abtasten der Messpunkte einer inkrementalen Messskala bestimmt werden. Hierzu werden sogenannten Inkrementalgeber verwendet, welche vergleichsweise einfach aufgebaut sind. Sie bieten relativ hohe Auflösungen an.

Neben der Erfassung der relativen Bewegung zwischen Laufschiene und Laufwagen, bzw. Abtastvorrichtung kann das System auch ausgelegt sein, eine absolute Position der Abtastvorrichtung bezüglich einer Referenzskala festzustellen. Hierbei kann die jeweilige absolute Position der Abtastvorrichtung an einem beliebigen Ort entlang der Laufschiene bestimmt werden, indem eine Änderung der relativen Position der Abtastvorrichtung bezüglich eines bestimmten Referenzpunktes gemessen wird. Die Abtastung der Referenzpunkte muss hierbei besonders zuverlässig erfolgen, da eine jegliche Fehlinterpretation zu einer völlig falschen Aussage bezüglich der Position des Laufschlittens in Bezug auf die Laufschiene führen würde.

Zu diesem Zweck kann die Referenzskala längs einer vorgegebenen Linie eine oder mehrere Referenzpunkte aufweisen, welche jeweils eine bestimmte absolute Position spezifizieren. Zur Bestimmung der Position kann die zuvor genannte Abtastvorrichtung längs der vorgegebenen Linie bewegt werden, um die jeweiligen Referenzpunkte mittels der Abtastvorrichtung optisch oder magnetisch abzutasten.

Zusammengefasst, übertragen solche sogenannten Absolutwertgeber stets die gesamte Positionsinformation und sind deshalb sehr gut zur Positionsbestimmung und -regelung geeignet. Die konventionelle Art besteht im Auslesen einer binären Information, wobei für jede binäre Stelle eine entsprechende optische oder magnetische Abtastung nötig ist. Alle diese Abtastungen müssen zueinander so eingestellt sein, dass unter allen Bedingungen kein Lesefehler auftreten kann. Mit zunehmend geforderter Abtastgenauigkeit steigen die Rechenzeit und der Energieverbrauch hierzu an.

In der Vergangenheit wurden die Referenzpunkte lediglich mit einer einfachen Schwellwertschaltung ausgewertet. Durch ein Überschreiten des Schwellwertes wird die Funktion digitalisiert. Dies hat den Vorteil, dass Plausibilitätsbetrachtungen durchgeführt werden können. Hierbei wird das Referenzsignal durch eine Halbbrücke erzeugt. In der praktischen Umsetzung kann diese Halbbrücke durch den Nord/Süd-Pol eines Permanentmagneten realisiert werden. Aus der Abtastung des Magnetfeldes eines Permanentmagneten im Verlaufe einer relativen Bewegung von einer Abtastvorrichtung entlang des Permanentmagneten resultiert ein Wechselsignal. Der Schwellwert kann beispielsweise in Abhängigkeit von der gewünschten Empfindlichkeit und der Amplitude des Wechselsignals, bzw. des Abstandes zwischen den Spitzenwerten (Spitze-Spitze) eingestellt werden. Hierbei kann der Abstand zwischen den Spitzenwerten durch die Breite der Magnetisierung beeinflusst werden. Die Lage der Spitzenwerte ist dabei unabhängig von der gemessenen Signalstärke.

Es besteht ein Problem bei dieser Art und Weise der Positionsbestimmung durch Referenzpunktabtastung, dass die Breite des Referenzimpulses in Relation zur Signalamplitude veränderbar ist. Im Falle einer überhöhten Signalamplitude kann hierdurch ein Referenzimpuls auftreten, welcher für eine zuverlässige Auswertung zu breit ist. Im Gegensatz dazu, im Falle einer zu geringen Signalamplitude, kann die Detektion des Referenzimpulses fälschlicherweise gänzlich ausbleiben. Ein weiteres Problem ist in dem Auftreten von Überschwingern zu sehen. In der Praxis wird eine Ausgangsgrösse, nach einer sprunghaften Änderung einer Eingangsgröße, wie beispielsweise das Magnetfeld der Permanentmagnete, den erwünschten Wert nicht direkt erreichen, sondern über den Sollwert hinausschiessen und sich erst danach auf den erwünschten Wert einstellen, bzw. einschwingen. Bezogen auf eine Referenzpunkt-erfassung durch Abtastung von einem Magnetfeldverlauf tritt dieses Phänomen hauptsächlich dann auf, wenn der Referenzsensor in einem Bereich starker Sättigung ist. Dadurch können Magnetfeldlinien erfasst werden, die im Nahfeld des Referenzimpulses in entgegengesetzter Richtung auftauchen. Hierdurch wird das Ergebnis der Referenzpunktabtastung verfälscht.

Ein weiteres Problem der Referenzpunkterfassung durch Abtastung von einem Magnetfeldverlauf besteht darin, dass mechanische Werkzeuge mit einer Restmagnetisierung nachträglich Magnetpole auf die Referenzspur aufbringen können. Da diese Störeinbringungen zu Magnetpolen resultieren, deren Breite jeweils länger als die Breite der Permanentmagnete der Referenzspur ist, resultiert hieraus eine geringere Amplitude. Zudem wird der Abstand zwischen den Spitzenwerten reduziert. Insgesamt wird das Messergebnis der Referenzpunkt-Abtastung hierdurch stark verfälscht.

Es ist Aufgabe der vorliegenden Erfindung ein lineares Wegmesssystem und ein Verfahren zum Bestimmen einer absoluten Position eines Laufschlittens entlang einer Laufschiene bereitzustellen, bei welchen die Probleme aus dem Stand der Technik gelöst werden.

Diese Aufgabe wird durch die Merkmale des Patentanspruchs 1 gelöst.

Ein lineares Wegmesssystem zum Bestimmen einer absoluten Position eines Laufschlittens entlang einer Laufschiene enthält eine entlang der Laufschiene aufgetragene Referenzskala und eine am Laufwagen angebrachte Abtastvorrichtung. Die Abtastvorrichtung ist dazu ausgelegt, Referenzpunkte entlang der Referenzskala abzutasten, wobei die Referenzpunkte als ein im Wesentlichen analoger Signalverlauf abtastbar sind, welcher aus aufeinanderfolgenden ersten und zweiten Signal-Halbwellenverläufen zusammengesetzt ist. Das lineare Wegmesssystem ist dazu ausgelegt, zumindest einen ersten und zweiten Schwellwert zu speichern, deren Pegel zueinander unterschiedlich einstellbar sind. Das lineare Wegmesssystem ist ferner dazu ausgelegt, in einem Streckenintervall des ersten Signal-Halbwellenverlaufes, jene abgetasteten Werte des ersten Signal-Halbwellenverlaufs, welche kleiner als der erste Schwellwert sind, als einen ersten diskreten SW1-Halbwellen-Bit-Wert zu speichern, und welche grösser als der erste Schwellwert sind, als einen zweiten diskreten SW1-Halbwellen-Bit-Wert zu speichern, und die ersten und zweiten diskreten SW1-Halbwellen-Bit-Werte in einem ersten Messwert-Register zu speichern. Das lineare Wegmesssystem ist ferner dazu ausgelegt, in einem Streckenintervall des zweiten Signal-Halbwellenverlaufes, jene abgetasteten Werte des zweiten Signal-Halbwellenverlaufs, welche kleiner als der zweite Schwellwert sind, als einen ersten diskreten SW2-Halbwellen-Bit-Wert zu speichern, und welche grösser als der zweite Schwellwert sind, als einen zweiten diskreten SW2-Halbwellen-Bit-Wert zu speichern, und die ersten und zweiten diskreten SW2-Halbwellen-Bit-Werte in einem zweiten Messwert-Register zu speichern. Das lineare Wegmesssystem enthält ferner ein erstes Soll-Messwert-Register zum Speichern von Soll-Messwerten für die Werte in dem Streckenintervall des ersten Signal-Halbwellenverlaufes und ein zweites Soll-Messwert-Register zum Speichern von Soll-Messwerten für die Werte in dem Streckenintervall des zweiten Signal-Halbwellenverlaufes, wobei die Messwert-Register und die Soll-Messwert-Register eine identische Bitlänge haben. Das lineare Wegmesssystem enthält mindestens einen Baustein zum logischen Vergleich zum Vergleichen jeweils der Inhalte des ersten und zweiten Messwert-Registers mit den Inhalten des ersten und zweiten Soll-Messwert-Registers und zum Ausgeben eines Differenzwertes aus diesem Vergleich. Das lineare Wegmesssystem ist dazu ausgelegt, auf Basis des Vergleichs einen jeden Referenzpunkt als einen Ideal-Referenzpunkt zu erfassen und auszugeben, wenn der Differenzwert innerhalb eines vorbestimmten Toleranzbereiches ist.

Ein wesentlicher Vorteil besteht darin, dass eine Referenzpunkterfassung geschaffen ist, welche redundant ist und eine genaue Definition der Referenzimpulsflanken ermöglicht. Hierdurch ist eine Überprüfung der Plausibilität der erfassten Werte möglich. Ein weiterer Vorteil besteht darin, dass die Abtastung besonders energiesparsam ist, wodurch die Möglichkeit besteht, die hierzu notwendige Energie aus zumindest einer Batterie oder einem Akkumulator zu speisen. Im Gegensatz zu herkömmlichen linearen Wegmesssystemen kann hierdurch vorteilhafterweise auf die Bereitstellung von elektrischen Leitungen zur Energiezuführung verzichtet werden. Die Inhalte der Messwert-Register (MR1, MR2) können Abbildungen der Funktion f(x) = Referenzwert > SW1 und f(x) = Referenzwert < SW2 sein.

Vorzugsweise sind die Referenzpunkte als einzelne Permanentmagnete ausgebildet, deren jeweiliger Magnetfeldverlauf durch die Abtastvorrichtung abtastbar ist. Hierdurch ist eine besonders genaue Abtastung möglich, da die Magnetfeldabtastung im Vergleich zu weiteren Abtastverfahren besonders störunempfindlich ist. Zudem kann eine Abtastung mit besonders feiner Rasterung erfolgen, da die Permanentmagnete im Vergleich zu weiteren Ausgestaltungen von Abtastpunkten eine besonders geringe Breite haben können.

Vorzugsweise sind die Referenzpunkte als optische Markierungen ausgebildet, welche durch die Abtastvorrichtung abtastbar sind. Hierbei werden Markierungen, welche auf der Referenzspur aufgebracht sind, durch optische Leseköpfe abgetastet. Diese optische Abtastung ist im Vergleich zu weiteren Abtastverfahren besonders kostengünstig realisierbar.

Vorzugsweise basieren die Soll-Messwerte auf mindestens einer Fehlererkennungs-Simulation. Hierdurch werden verzerrte Signalmuster, welche aufgrund von einer Störeintragung basieren, beispielsweise hervorgerufen durch magnetische Werkzeuge, von der Erfassung ausgeschlossen. Somit wird eine unverfälschte Signalabtastung gewährleistet.

Vorzugsweise basieren jeweils der Pegel von dem ersten Schwellwert und der Pegel von dem zweiten Schwellwert auf mindestens einer Fehlererkennungs-Simulation. Das lineare Wegmesssystem kann dazu ausgelegt sein, mehr als den ersten und zweiten Schwellwert zu speichern. Beispielsweise können die ersten und zweiten Signal-Halbwellenverläufe in aufeinanderfolgender Abfolge einem Sinus-Wellenverlauf folgen. Hierbei können die Werte des ersten Signal-Halbwellenverlaufes positive Werte annehmen und die Werte des zweiten Signal-Halbwellenverlaufes negative Werte annehmen. In diesem Beispiel kann der erste Schwellwert auf einen positiven Pegel eingestellt werden und kann der zweite Schwellwert auf einen negativen Pegel eingestellt werden. Insgesamt ist eine besonders fein abgestimmte Einstellung zur Erzielung einer hochpräzisen Abtastung möglich.

Vorzugsweise ist das lineare Wegmesssystem dazu ausgelegt, den Zeitpunkt der Abtastung bei einem Vielfachen des Winkelbetrages von 180° auf Basis von den Referenzpunkten vorzugeben. Hierbei geben die Inkrementalwerte den Zeitpunkt der Abtastung bei den Winkelbeträgen von 0°, 180°, 360° usw. vor.

Vorzugsweise ist das lineare Wegmesssystem dazu ausgelegt, den Referenzpunkt bei einer Verschiebung von dem Winkelbetrag des Abtastpunktes zu interpolieren. Ein Vorteil besteht darin, dass auch bei einer Verschiebung von dem Winkelbetrag des Abtastpunktes, beispielsweise hervorgerufen durch eine Beschleunigung des Laufschlittens, immer noch eine zuverlässige Positionsbestimmung möglich ist. Der Winkelbetrag kann beispielsweise auf 20°, 200°, usw. verschoben werden.

Die zuvor genannte Aufgabe wird zudem durch ein Verfahren zum Bestimmen einer absoluten Position eines Laufschlittens entlang einer Laufschiene, mit einer entlang der Laufschiene aufgetragenen Referenzskala und einer am Laufwagen angebrachten Abtastvorrichtung, gelöst. Die Abtastvorrichtung tastet zumindest einen Referenzpunkt entlang der Referenzskala ab, wobei der Referenzpunkt als ein im Wesentlichen analoger Signalverlauf abgetastet wird, welcher aus aufeinanderfolgenden ersten und zweiten Signal-Halbwellenverläufen zusammengesetzt ist. Das Verfahren enthält die Schritte:
a) Speichern zumindest eines ersten Schwellwertes und eines zweiten Schwellwertes, wobei deren Pegel zueinander unterschiedlich eingestellt werden,
b) in einem Streckenbereich des ersten Signal-Halbwellenverlaufes:
   Vergleichen der abgetasteten Werte des ersten Signal-Halbwellenverlaufs mit dem ersten Schwellwert,
      Erfassen der abgetasteten Werte des ersten Signal-Halbwellenverlaufs, welche kleiner als der erste Schwellwert sind, als einen ersten diskreten SW1-Halbwellen-Bit-Wert, Erfassen der abgetasteten Werte des ersten Signal-Halbwellenverlaufs, welche grösser als der erste Schwellwert sind, als einen zweiten diskreten SW1-Halbwellen-Bit-Wert, und
      Speichern der ersten und zweiten diskreten SW1-Halbwellen-Bit-Werte in einem ersten Messwert-Register,
c) in einem Streckenbereich des zweiten Signal-Halbwellenverlaufes:
   Vergleichen der abgetasteten Werte des zweiten Signal-Halbwellenverlaufs mit dem zweiten Schwellwert,
      Erfassen der abgetasteten Werte des zweiten Signal-Halbwellenverlaufs, welche kleiner als der zweite Schwellwert sind, als einen ersten diskreten SW2-Halbwellen-BitWert,
      Erfassen der abgetasteten Werte des zweiten Signal-Halbwellenverlaufs, welche grösser als der zweite Schwellwert sind, als einen zweiten diskreten SW2-Halbwellen-BitWert, und
      Speichern der ersten und zweiten diskreten SW2-Halbwellen-Bit-Werte in einem zweiten Messwert-Register,
d) Speichern von Soll-Messwerten für die Werte in dem Streckenintervall des ersten Signal-Halbwellenverlaufes und von Soll-Messwerten für die Werte in dem Streckenintervall des zweiten Signal-Halbwellenverlaufes in jeweils einem ersten und einem zweiten Soll-Messwert-Register, wobei die Messwert-Register und die Soll-Messwert-Register eine identische Bitlänge haben,
e) Vergleichen jeweils der Inhalte des ersten und zweiten Messwert-Registers mit den Inhalten des ersten und zweiten Soll-Messwert-Registers und Ausgeben eines Differenzwertes aus dem Vergleich, und
f) Erfassen und Ausgeben, auf Basis des Vergleichsschrittes, eines jeden Referenzpunktes als einen Ideal-Referenzpunkt, wenn der Differenzwert innerhalb eines vorbestimmten Toleranzbereiches ist.

Ein wesentlicher Vorteil des erfinderischen Verfahrens besteht darin, dass eine Referenzpunkterfassung mit Redundanz geschaffen ist, welche eine genaue Definition der Referenzimpulsflanken ermöglicht. Hierdurch wird fortdauernd die Plausibilität der erfassten Werte überprüft. Ein weiterer Vorteil besteht darin, dass eine besonders energiesparsame Abtastung möglich ist. Hierdurch eröffnet sich die Möglichkeit, die zur Referenzpunkterfassung notwendige Energie aus zumindest einer Batterie oder einem Akkumulator zu speisen. Auf die Verlegung von elektrischen Leitungen zur Energiezuführung kann hierdurch vorteilhafterweise verzichtet werden.

Vorzugsweise werden die Referenzpunkte als einzelne Permanentmagnete ausgebildet, deren jeweiliger Magnetfeldverlauf durch die Abtastvorrichtung abgetastet wird. Hierdurch ist eine besonders genaue Abtastung möglich, da die Magnetfeldabtastung im Vergleich zu weiteren Abtastverfahren besonders störunempfindlich ist. Zudem kann eine Abtastung mit besonders feiner Rasterung erfolgen, da die Permanentmagnete im Vergleich zu weiteren Ausgestaltungen von Abtastpunkten eine besonders geringe Breite haben können.

Vorzugsweise werden die Referenzpunkte als optische Markierungen ausgebildet, welche durch die Abtastvorrichtung abgetastet werden. Bei diesem Verfahren werden optisch detektierbare Markierungen, welche auf der Referenzskala aufgebracht sind, durch optische Leseköpfe abgetastet. Diese Form der Abtastung ist im Vergleich zu weiteren Abtastverfahren besonders kostengünstig realisierbar.

Vorzugsweise enthält das Verfahren ferner den Schritt eines Erstellens der Soll-Messwerte basierend auf mindestens einer Fehlererkennungs-Simulation. Hierdurch werden verzerrte Signalmuster im Vorfeld von einer Erfassung ausgeschlossen. Derartige verzerrte Signalmuster können aufgrund von einer magnetischen Störeintragung basieren, welche beispielsweise durch magnetische Werkzeuge hervorgerufen wird. Somit wird insgesamt eine unverfälschte Signalabtastung gewährleistet.

Vorzugsweise enthält das Verfahren ferner den Schritt eines Erstellens jeweils des Pegels von dem ersten Schwellwert und des Pegels von dem zweiten Schwellwert basierend auf mindestens einer Fehlererkennungs-Simulation. Hierdurch ist eine besonders fein abgestimmte Einstellung zur Erzielung einer hochpräzisen Abtastung möglich.

Vorzugsweise wird der Zeitpunkt der Abtastung bei einem Vielfachen des Winkelbetrages von 180° auf Basis von den Referenzpunkten vorgegeben. Die Inkrementalwerte geben somit den Zeitpunkt der Abtastung bei den Winkelbeträgen von 0°, 180°, 360° usw. vor.

Vorzugsweise wird der Referenzpunkt bei einer Verschiebung von dem Winkelbetrag des Abtastpunktes interpoliert. Somit ist eine zuverlässige Positionsbestimmung auch bei einer Verschiebung von dem Winkelbetrag des Abtastpunktes, beispielsweise hervorgerufen durch eine Beschleunigung des Laufschlittens, dauerhaft gewährleistet. Der Winkelbetrag kann beispielsweise auf 20°, 200°, usw. verschoben werden.

Im Folgenden wird die Erfindung anhand eines Ausführungsbeispiels näher erläutert. Hierbei zeigen:
- Figur 1: eine Detailansicht eines linearen Wegmesssystems, bei welcher ein Abschnitt einer Laufschiene vergrössert angezeigt ist; und
- Figur 2: einen analogen Signalverlauf, welcher in Ansprechen auf einen Magnetfeldverlauf resultiert, welcher durch eine entlang von einer Referenzskala geführte Abtastvorrichtung des linearen Wegmesssystems abgetastet wird.

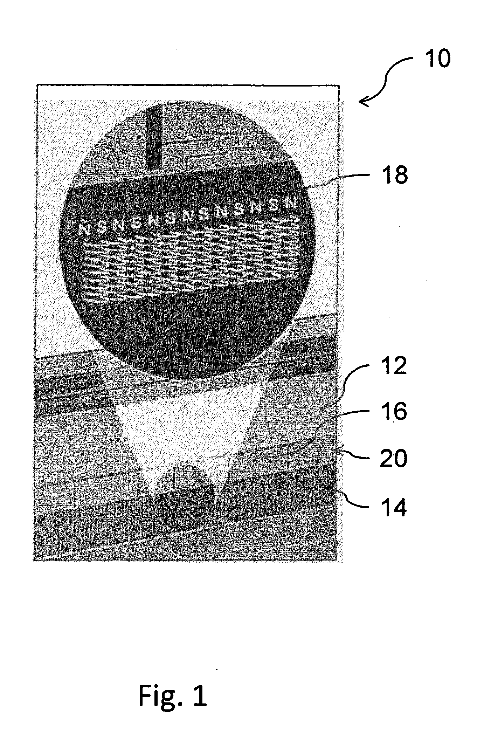

In Fig. 1 ist eine Detailansicht eines linearen Wegmesssystems 10 gezeigt, welche einen Flankenabschnitt einer Laufschiene 12 des linearen Wegmesssystems 10 vergrössert anzeigt. Die Laufschiene 12 dient zum Führen eines Laufschlittens, an welchem eine Abtastvorrichtung stationär angebracht ist (beide nicht gezeigten). An der Flanke der Laufschiene 12 sind eine Inkrementalskala 14 und eine Referenzskala 16 aufgetragen.

Die Inkrementalskala 14 ist aus nebeneinander angeordneten Permanentmagneten 18 ausgebildet, welche abwechselnd in N-S, N-S, usw. Richtung ausgerichtet sind. Zur Veranschaulichung sind die hieraus resultierenden Magnetfeldlinienverläufe schematisch dargestellt.

Um relative Veränderungen der Position der Abtastvorrichtung bezüglich der Inkrementalskala 14 messen zu können, wird der Laufschlitten mit der Abtastvorrichtung entlang der Spur der Permanentmagnete 18 bewegt. Die Bewegung der Abtastvorrichtung resultiert dabei in einer periodischen Veränderung eines Messsignals in Ansprechen auf den Magnetfeldverlauf der einzelnen Permanentmagnete 18. Diese periodische Veränderung des Messsignals gibt Aufschluss über die Anzahl der Permanentmagnete 18, an welchen die Abtastvorrichtung vorbeibewegt wurde. Dies ermöglicht wiederum einen Rückschluss über die zurückgelegte Distanz des Laufschlittens in Relation zur Laufschiene 12 und zur Zeit.

Die ferner an der Laufschiene 12 angebrachte Referenzskala 16 enthält vereinzelte Referenzpunkte 20, welche derart angeordnet sind, dass eine absolute Position der Abtastvorrichtung bezüglich der Referenzskala 16 feststellbar ist. Hierbei kann die jeweilige absolute Position der Abtastvorrichtung an einem beliebigen Ort entlang von der Laufschiene 12 bestimmt werden, indem eine Änderung der relativen Position der Abtastvorrichtung bezüglich eines bestimmten (z.B. kodierten) Referenzpunktes 20 gemessen wird. Die Abtastung der Referenzpunkte 20 muss hierbei besonders zuverlässig erfolgen, da eine jegliche Fehlinterpretation zu einer völlig falschen Aussage bezüglich der Position des Laufschlittens in Bezug auf die Laufschiene 12 führen würde.

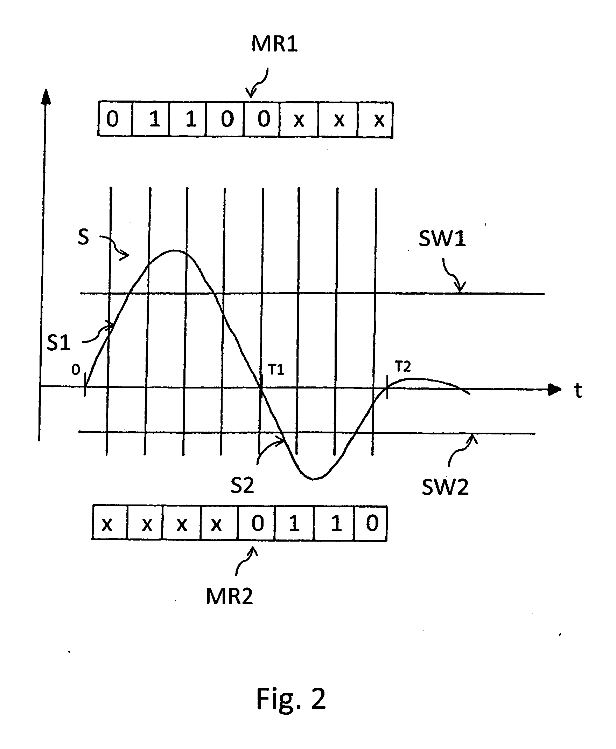

Figur 2 zeigt einen analogen Signalverlauf S, welcher in Ansprechen auf einen Magnetfeldverlauf eines Referenzpunktes resultiert, welcher durch die entlang der Referenzskala geführte Abtastvorrichtung (beide nicht gezeigt) abgetastet wird. Erfindungsgemäss werden ein erster Schwellwert SW1 und ein zweiter Schwellwert SW2 eingestellt und gespeichert.

In einem Zeitbereich (t = 0 bis T1) positiver Halbwellenwerte des Signalverlaufs S, welcher als erster Signal-Halbwellenverlauf S1 bezeichnet ist, werden jene abgetasteten Werte des analogen Signalverlaufs S, welche kleiner als der erste Schwellwert SW1 sind, als ein erster diskreter SW1-Halbwellen-Bit-Wert gespeichert. In dem in der Figur gezeigten Beispiel nimmt dieser Wert den Binärwert "0" an. Dieser Binärwert "0" wird in einem ersten Messwert-Register MR1 gespeichert.

In dem Zeitbereich positiver Halbwellenwerte (t = 0 bis T1) des Signalverlaufs S (erster Signal-Halbwellenverlauf S1) werden jene abgetasteten Werte des analogen Signalverlaufs S, welche grösser als der erste Schwellwert SW1 sind, als ein zweiter diskreter SW1-Halbwellen-Bit-Wert gespeichert. In dem in der Figur gezeigten Beispiel nimmt dieser Wert den Binärwert "1" an. Dieser Binärwert "1" wird ebenfalls in dem ersten Messwert-Register MR1 gespeichert. In dem Messwert-Register MR1 wird somit die Bit-Folge (Inhalt) 01100xxx gespeichert.

Ferner, in einem Zeitbereich (t = T1 bis T2) negativer Halbwellenwerte des analogen Signalverlaufs S, welcher als zweiter Signal-Halbwellenverlauf S2 bezeichnet ist, werden jene abgetasteten Werte des analogen Signalverlaufs S, welche grösser als der zweite Schwellwert SW2 sind, als ein erster diskreter SW2-Halbwellen-Bit-Wert gespeichert. In dem in der Figur gezeigten Beispiel nimmt dieser Wert den Binärwert "0" an. Dieser Binärwert "0" wird in einem zweiten Messwert-Register MR2 gespeichert.

In dem Zeitbereich (t = T1 bis T2) negativer Halbwellenwerte des analogen Signalverlaufs S (zweiter Signal-Halbwellenverlauf S2) werden jene abgetasteten Werte des analogen Signalverlaufs S, welche kleiner als der zweite Schwellwert SW2 sind, als ein zweiter diskreter SW2-Halbwellen-Bit-Wert gespeichert. In dem in der Figur gezeigten Beispiel nimmt dieser Wert den Binärwert "1" an. Dieser Binärwert "1" wird in dem zweiten Messwert-Register MR2 gespeichert. In dem Messwert-Register MR2 wird somit die Bit-Folge (Inhalt) xxxx0110 gespeichert.

Das lineare Wegmesssystem enthält ferner ein erstes Soll-Messwert-Register und ein zweites Soll-Messwert-Register (beide nicht gezeigt), welche jeweils Soll-Messwerte für die Werte in dem Zeitbereich positiver Halbwellenwerte (erster Signal-Halbwellenverlauf S1) und Soll-Messwerte für die Werte in dem Zeitbereich negativer Halbwellenwerte (zweiter Signal-Halbwellenverlauf S2) speichern. Diese Soll-Messwerte basieren auf Simulationen. Die Messwert-Register MR1, MR2 und die Soll-Messwert-Register können jeweils eine identische Bitlänge haben.

Ein Baustein zum logischen Vergleich, beispielsweise ein Komparator, vergleicht jeweils die Inhalte des ersten und zweiten Messwert-Registers MR1, MR2 mit den Inhalten des ersten und zweiten Soll-Messwert-Registers. Beispielsweise hält das erste Soll-Messwert-Register die Bit-Folge 01100xxx gespeichert und hält das zweite Soll-Messwert-Register die Bit-Folge xxxx0110 gespeichert. In diesem Beispiel gibt der Baustein zum logischen Vergleich, resultierend aus dem Vergleich der gespeicherten Inhalte des ersten Soll-Messwert-Registers mit den im ersten Messwert-Register MR1 gespeicherten Inhalten, ein Signal aus, welches auf eine Überein- stimmung der Inhalte (Plausibilität) hinweist. Ferner gibt der Baustein zum logischen Vergleich, resultierend aus dem Vergleich der gespeicherten Inhalte des zweiten Soll-Messwert-Registers mit den im zweiten Messwert-Register MR2 gespeicherten Inhalten, ein Signal aus, welches auf eine Übereinstimmung der Inhalte hinweist.

Auf Basis dieses Vergleichs (vollständige Übereinstimmung) erfasst das lineare Wegmesssystem somit den abgetasteten Referenzpunkt des Referenzmusters als einen Ideal-Referenzpunkt. Das lineare Wegmesssystem kann dazu ausgelegt sein, auch dann den Referenzpunkt des Referenzmusters als einen Ideal-Referenzpunkt zu erfassen, wenn aus dem Vergleich eine nicht vollständige Übereinstimmung resultiert, jedoch die Differenz zwischen den gespeicherten Inhalten des ersten und/oder zweiten Soll-Messwert-Registers und den im ersten und/oder zweiten Messwert-Register MR1, MR2 gespeicherten Inhalten innerhalb eines vorbestimmten Toleranzbereiches liegt.

Sollte diese Differenz jedoch ausserhalb des vorbestimmten Toleranzbereiches liegen, ist das lineare Wegmesssystem dazu ausgelegt, den erfassten Signalverlauf zu verwerfen. Das lineare Wegmesssystem ist mit anderen Worten dazu ausgelegt, diesen Signalverlauf nicht als Referenzpunkt zu betrachten. Somit wird vermieden, dass das lineare Wegmesssystem einen Signalverlauf, welcher z.B. aufgrund von einem Überschwinger oder einer Restmagnetisierung herrührt, fälschlicherweise als Referenzpunkt erfasst wird. Hierdurch wird insgesamt die Zuverlässigkeit der Referenzpunkt-Erfassung deutlich erhöht. Aufgrund der im Vergleich zum Stand der Technik reduzierten Abtastrate wird zudem der Energieverbrauch der Abtastvorrichtung deutlich reduziert. Somit ist es vorteilhafterweise möglich, dass die Abtastvorrichtung ihre Energie aus einer mitgeführten Batterie oder einem Akkumulator speist.

## Patentansprüche

1. Lineares Wegmesssystem (10) zum Bestimmen einer absoluten Position eines Laufschlittens entlang einer Laufschiene (12), mit einer entlang der Laufschiene (12) aufgetragenen Referenzskala (16) und einer am Laufwagen angebrachten Abtastvorrichtung, wobei die Abtastvorrichtung dazu ausgelegt ist, Referenzpunkte (20) entlang der Referenzskala (16) abzutasten, wobei die Referenzpunkte (20) als ein im Wesentlichen analoger Signalverlauf (S) abtastbar sind, welcher aus aufeinanderfolgenden ersten und zweiten Signal-Halbwellenverläufen (S1, S2) zusammengesetzt ist, dadurch gekennzeichhet, dass das lineare Wegmesssystem (10) ferner umfasst:
a) zumindest einen Schwellwertspeicher zum Speichern eines ersten und zweiten Schwellwerts (SW1, SW2), deren Pegel zueinander unterschiedlich einstellbar sind,
b) einen ersten Komparator zum Vergleichen, in einem Streckenintervall des ersten Signal-Halbwellenverlaufes (S1), der abgetasteten Werte des ersten Signal-Halbwellenverlaufs (S1) mit dem ersten Schwellwert (SW1), und zum Ausgeben:jener abgetasteten Werte des ersten Signal-Halbwellenverlaufs (S1), welche kleiner als der erste Schwellwert (SW1) sind, an ein erstes Messwert-Register (MR1) zum Speichern jener Werte als einen ersten diskreten SW1-Halbwellen-Bit-Wert, und
jener abgetasteten Werte des ersten Signal-Halbwellenverlaufs (S1), welche grösser als der erste Schwellwert (SW1) sind, an das erste Messwert-Register (MR1) zum Speichern jener Werte als einen zweiten diskreten SW1-Halbwellen-Bit-Wert,
c) einen zweiten Komparator zum Vergleichen, in einem Streckenintervall des zweiten Signal-Halbwellenverlaufes (S2), der abgetasteten Werte des zweiten Signal-Halbwellenverlaufs (S2) mit dem zweiten Schwellwert (SW2), und zum Ausgeben:
jener abgetasteten Werte des zweiten Signal-Halbwellenverlaufs (S2), welche kleiner als der zweite Schwellwert (SW2) sind, an ein zweites Messwert-Register (MR2) zum Speichern jener Werte als einen ersten diskreten SW2-Halbwellen-Bit-Wert, und
jener abgetasteten Werte des zweiten Signal-Halbwellenverlaufs (S2), welche grösser als der zweite Schwellwert (SW2) sind, an das zweite Messwert-Register (MR2) zum Speichern jener Werte als einen zweiten diskreten SW2-Halbwellen-Bit-Wert,
d) ein erstes Soll-Messwert-Register (MRsoll1) zum Speichern von Soll-Messwerten für die Werte in dem Streckenintervall des ersten Signal-Halbwellenverlaufes (S1) und ein zweites Soll-Messwert-Register (MRsoll2) zum Speichern von Soll-Messwerten für die Werte in dem Streckenintervall des zweiten Signal-Halbwellenverlaufes (S2), wobei die Messwert-Register (MR1, MR2) und die Soll-Messwert-Register (MRsoll1, MRsoll2) eine identische Bitlänge haben,
e) mindestens einen Baustein zum logischen Vergleich zum Vergleichen jeweils der Inhalte des ersten und zweiten Messwert-Registers (MR1, MR2) mit den Inhalten des ersten und zweiten Soll-Messwert-Registers (MRsoll1, MRsoll2), und zum Ausgeben eines Differenzwertes aus diesem Vergleich, und
f) einen Toleranzbereich-Komparator zum Vergleichen des Differenzwertes mit einem vorbestimmten Toleranzbereich, und zum Erfassen und Ausgeben, auf Basis des Vergleichs, eines jeden Referenzpunktes (20) als einen Ideal-Referenzpunkt, wenn der Differenzwert innerhalb eines vorbestimmten Toleranzbereiches ist.

2. Lineares Wegmesssystem (10) nach Anspruch 1, bei welchem die Referenzpunkte (20) als einzelne Permanentmagnete ausgebildet sind, deren jeweiliger Magnetfeldverlauf durch die Abtastvorrichtung abtastbar ist.

3. Lineares Wegmesssystem (10) nach Anspruch 1, bei welchem die Referenzpunkte (20) als optische Markierungen ausgebildet sind, welche durch die Abtastvorrichtung abtastbar sind.

4. Lineares Wegmesssystem (10) nach einem der vorhergehenden Ansprüche, bei welchem die Soll-Messwerte auf mindestens einer Fehlererkennungs-Simulation basieren.

5. Lineares Wegmesssystem (10) nach einem der vorhergehenden Ansprüche, bei welchem jeweils der Pegel von dem ersten Schwellwert (SW1) und der Pegel von dem zweiten Schwellwert (SW2) auf mindestens einer Fehlererkennungs-Simulation basieren.

6. Lineares Wegmesssystem (10) nach einem der vorhergehenden Ansprüche, welches dazu ausgelegt ist, den Zeitpunkt der Abtastung bei einem Vielfachen des Winkelbetrages von 180° auf Basis von den Referenzpunkten vorzugeben.

7. Lineares Wegmesssystem (10) nach Anspruch 6, welches dazu ausgelegt ist, den Referenzpunkt bei einer Verschiebung von dem Winkelbetrag des Abtastpunktes zu interpolieren.

8. Verfahren zum Bestimmen einer absoluten Position eines Laufschlittens entlang einer Laufschiene (12), mit einer entlang der Laufschiene (12) aufgetragenen Referenzskala (16) und einer am Laufwagen angebrachten Abtastvorrichtung, wobei die Abtastvorrichtung zumindest einen Referenzpunkt (20) entlang der Referenzskala (16) abtastet, wobei der Referenzpunkt (20) als ein im Wesentlichen analoger Signalverlauf (S) abgetastet wird, welcher aus aufeinanderfolgenden ersten und zweiten Signal-Halbwellenverläufen (S1, S2) zusammengesetzt ist, mit den Schritten:
a) Speichern zumindest eines ersten Schwellwertes (SW1) und eines zweiten Schwellwertes (SW2), wobei deren Pegel zueinander unterschiedlich eingestellt werden,
b) in einem Streckenbereich des ersten Signal-Halbwellenverlaufes (S1) :
Vergleichen der abgetasteten Werte des ersten Signal-Halbwellenverlaufs (S1) mit dem ersten Schwellwert (SW1) durch einen ersten Komparator,
Ausgeben jener abgetasteten Werte des ersten Signal-Halbwellenverlaufs (S1), welche kleiner als der erste Schwellwert (SW1) sind, an ein erstes Messwert-Register (MR1), und Speichern jener Werte als einen ersten diskreten SW1-Halbwellen-Bit-Wert,
Ausgeben jener abgetasteten Werte des ersten Signal-Halbwellenverlaufs (S1), welche grösser als der erste Schwellwert (SW1) sind, an das erstes Messwert-Register (MR1), und Speichern jener Werte als einen zweiten diskreten SW1-Halbwellen-Bit-Wert,
c) in einem Streckenbereich des zweiten Signal-Halbwellenverlaufes (S2):
Vergleichen der abgetasteten Werte des zweiten Signal-Halbwellenverlaufs (S2) mit dem zweiten Schwellwert (SW2) durch einen zweiten Komparator,
Ausgeben jener abgetasteten Werte des zweiten Signal-Halbwellenverlaufs (S2), welche kleiner als der zweite Schwellwert (SW2) sind, an ein zweites Messwert-Register (MR2), und Speichern jener Werte als einen ersten diskreten SW2-Halbwellen-Bit-Wert,
Ausgeben jener abgetasteten Werte des zweiten Signal-Halbwellenverlaufs (S2), welche grösser als der zweite Schwellwert (SW2) sind, an das zweite Messwert-Register (MR2), und Speichern jener Werte als einen zweiten diskreten SW2-Halbwellen-Bit-Wert,
d) Speichern von Soll-Messwerten für die Werte in dem Streckenintervall des ersten Signal-Halbwellenverlaufes (S1) und von Soll-Messwerten für die Werte in dem Streckenintervall des zweiten Signal-Halbwellenverlaufes (S2) in jeweils einem ersten und einem zweiten Soll-Messwert-Register (MRsoll1, MRsoll2), wobei die Messwert-Register (MR1, MR2) und die Soll-Messwert-Register (MRsoll1, MRsoll2) eine identische Bitlänge haben,
e) Vergleichen jeweils der Inhalte des ersten und zweiten Messwert-Registers (MR1, MR2) mit den Inhalten des ersten und zweiten Soll-Messwert-Registers (MRsoll1, MRsoll2) durch einen Baustein zum logischen Vergleich, und Ausgeben eines Differenzwertes aus dem Vergleich, und
f) Vergleichen des Differenzwertes mit einem vorbestimmten Toleranzbereich durch einen Toleranzbereich-Komparator, und Erfassen und Ausgeben, auf Basis des Vergleichsschrittes, eines jeden Referenzpunktes (20) als einen Ideal-Referenzpunkt, wenn der Differenzwert innerhalb eines vorbestimmten Toleranzbereiches ist.

9. Verfahren nach Anspruch 8, bei welchem die Referenzpunkte (20) als einzelne Permanentmagnete ausgebildet werden, deren jeweiliger Magnetfeldverlauf durch die Abtastvorrichtung abgetastet wird.

10. Verfahren nach Anspruch 8, bei welchem die Referenzpunkte (20) als optische Markierungen ausgebildet werden, welche durch die Abtastvorrichtung abgetastet werden.

11. Verfahren nach einem der Ansprüche 8 bis 10, ferner mit dem Schritt:
Erstellen der Soll-Messwerte basierend auf mindestens einer Fehlererkennungs-Simulation.

12. Verfahren nach einem der Ansprüche 8 bis 11, ferner mit dem Schritt:
Erstellen jeweils des Pegels von dem ersten Schwellwert (SW1) und des Pegels von dem zweiten Schwellwert (SW2) basierend auf mindestens einer Fehlererkennungs-Simulation.

13. Verfahren nach einem der Ansprüche 8 bis 12, bei welchem der Zeitpunkt der Abtastung bei einem Vielfachen des Winkelbetrages von 180° auf Basis von den Referenzpunkten vorgegeben wird.

14. Verfahren nach Anspruch 13, bei welchem der Referenzpunkt bei einer Verschiebung von dem Winkelbetrag des Abtastpunktes interpoliert wird.

## Claims

1. A linear position measuring system (10) for determining an absolute position of a carriage along a slide rail (12), with a reference scale (16) placed along the slide rail (12) and a scanner secured to the track carriage, wherein the scanner is designed to scan reference points (20) along the reference scale (16), wherein the reference points (20) can be scanned as an essentially analog signal progression (S), which consists of sequential first and second signal half-wave progressions (S1, S2), **characterized in that** the linear position measuring system (10) further encompasses:
a) At least one threshold storage device for storing a first and second threshold (SW1, SW2), whose levels can be varyingly adjusted relative to each other,
b) A first comparator for comparing the scanned values of the first signal half-wave progression (S1) with the first threshold (SW1) in a sectional interval of the first signal half-wave progression (S1), and to output:
those scanned values of the first signal half-wave progression (S1) that are less than the first threshold (SW1) to a first measured value register (MR1) for storing those values as a first discrete SW1 half-wave bit value, and
those scanned values of the first signal half-wave progression (S1) that are greater than the first threshold (SW1) to the first measured value register (MR1) for storing those values as a second discrete SW1 half-wave bit value,
c) A second comparator for comparing the scanned values of the second signal half-wave progression (S2) with the second threshold (SW2) in a sectional interval of the second signal half-wave progression (S2), and to output:
those scanned values of the second signal half-wave progression (S2) that are less than the second threshold (SW2) to a second measured value register (MR2) for storing those values as a first discrete SW2 half-wave bit value, and
those scanned values of the second signal half-wave progression (S2) that are greater than the second threshold (SW2) to the second measured value register (MR2) for storing those values as a second discrete SW2 half-wave bit value,
d) A first set measured value register (MRsoll1) for storing set measured values for the values in the sectional interval of the first signal half-wave progression (S1), and a second set measured value register (MRsoll2) for storing set measured values for the values in the sectional interval of the second signal half-wave progression (S2), wherein the measured value registers (MR1, MR2) and set measured value registers (MRsoll1, MRsoll2) exhibit an identical bit length,
e) At least one logical comparison module for comparing the respective contents of the first and second measured value register (MR1, MR2) with the contents of the first and second set measured value register (MRsolll, MRsoll2), and for outputting a differential value from this comparison, and
f) A tolerance range comparator for comparing the differential value with a predetermined tolerance range, and, based on this comparison, to acquire and output each reference point (20) as an ideal reference point if the differential value lies within a predetermined tolerance range.

2. The linear position measuring system (10) according to claim 1, in which the reference points (20) are designed as individual permanent magnets, whose respective magnetic field progression can be scanned by the scanner.

3. The linear position measuring system (10) according to claim 1, in which the reference points (20) are designed as optical markings, which can be scanned by the scanner.

4. The linear position measuring system (10) according to one of the preceding claims, in which the set measured values are based on at least one error detection simulation.

5. The linear position measuring system (10) according to one of the preceding claims, in which the respective level of the first threshold (SW1) and level of the second threshold (SW2) are based on at least one error detection simulation.

6. The linear position measuring system (10) according to one of the preceding claims, which is designed to prescribe the scanning time based on the reference points at multiples of a 180° angle.

7. The linear position measuring system (10) according to claim 6, which is designed to interpolate the reference point given a shift in the scanning point angle.

8. A method for determining an absolute position of a carriage along a slide rail (12), with a reference scale (16) placed along the slide rail (12) and a scanner secured to the track carriage, wherein the scanner scans at least one reference point (20) along the reference scale (16), wherein the reference point (20) is scanned as an essentially analog signal progression (S), which consists of sequential first and second signal half-wave progressions (S1, S2), with the following steps:
a) Storing at least one first threshold (SW1) and one second threshold (SW2), wherein their levels are varyingly adjusted relative to each other,
b) In a sectional interval of the first signal half-wave progression (S1) :
Comparing the scanned values of the first signal half-wave progression (S1) with the first threshold (SW1) by means of a first comparator,
Outputting those scanned values of the first signal half-wave progression (S1) that are less than the first threshold (SW1) to a first measured value register (MR1), and storing those values as a first discrete SW1 half-wave bit value,
Outputting those scanned values of the first signal half-wave progression (S1) that are greater than the first threshold (SW1) to the first measured value register (MR1), and storing those values as a second discrete SW1 half-wave bit value,
c) In a sectional interval of the second signal half-wave progression (S2):
Comparing the scanned values of the second signal half-wave progression (S2) with the second threshold (SW2) by means of a second comparator,
Outputting those scanned values of the second signal half-wave progression (S2) that are less than the second threshold (SW2) to a second measured value register (MR2), and storing those values as a first discrete SW2 half-wave bit value,
Outputting those scanned values of the second signal half-wave progression (S2) that are greater than the second threshold (SW2) to the second measured value register (MR2), and storing those values as a second discrete SW2 half-wave bit value,
d) Storing set measured values for the values in the sectional interval of the first signal half-wave progression (S1), and set measured values for the values in the sectional interval of the second signal half-wave progression (S2) in a respective first and second set measured value register (MRsolll, MRsoll2), wherein the measured value registers (MR1, MR2) and set measured value registers (MRsoll1, MRsoll2) exhibit an identical bit length,
e) Comparing the respective contents of the first and second measured value register (MR1, MR2) with the contents of the first and second set measured value register (MRsolll, MRsoll2) by means of a logical comparison module, and outputting a differential value from this comparison, and
f) Comparing the differential value with a predetermined tolerance range by means of a tolerance range comparator and, based on this comparison, acquiring and outputting each reference point (20) as an ideal reference point if the differential value lies within a predetermined tolerance range.

9. The method according to claim 8, in which the reference points (20) are designed as individual permanent magnets, whose respective magnetic field progression is scanned by the scanner.

10. The method according to claim 8, in which the reference points (20) are designed as optical markings, which are scanned by the scanner.

11. The method according to one of claims 8 to 10, further involving the step of:
Generating the set measured values based on at least one error detection simulation.

12. The method according to one of claims 8 to 11, further involving the step of:
Generating the respective level of the first threshold (SW1) and level of the second threshold (SW2) based on at least one error detection simulation.

13. The method according to one of claims 8 to 12, in which the scanning time is prescribed based on the reference points at multiples of a 180° angle.

14. The method according to claim 13, in which the reference point is interpolated given a shift in the scanning point angle.

## Revendications

1. Système linéaire de mesure de course (10) pour la détermination d'une position absolue d'un chariot le long d'un rail de roulement (12), comportant une graduation de référence (16) appliquée le long du rail de roulement (12) et un dispositif de balayage installé sur le chariot, le dispositif de balayage étant conçu pour balayer des points de référence (20) le long de la graduation de référence (16), les points de référence (20) pouvant être balayés sous forme d'une courbe de signaux sensiblement analogique (S) qui est composée d'une première et d'une seconde courbes de demi-ondes de signaux successives (S1, S2), **caractérisé en ce que** le système linéaire de mesure de course (10) comprend en outre :
a) au moins une mémoire de valeurs seuil pour la sauvegarde d'une première et d'une seconde valeur seuil (SW1, SW2) dont les niveaux sont réglables différemment les uns par rapport aux autres,
b) un premier comparateur pour comparer, dans un intervalle d'évolution de la première courbe de demi-ondes de signaux (S1), les valeurs balayées de la première courbe de demi-ondes de signaux (S1) avec la première valeur seuil (SW1) et pour envoyer les valeurs balayées de la première courbe de demi-ondes de signaux (S1) qui sont inférieures à la première valeur seuil (SW1) au niveau d'un premier registre de valeurs de mesure (MR1) pour l'enregistrement de ces valeurs sous forme d'une première valeur discrète en octets de demi-ondes SW1 et
les valeurs balayées de la première courbe de demi-ondes de signaux (S1) qui sont supérieures à la première valeur seuil (SW1) au premier registre de valeurs de mesure (MR1) pour l'enregistrement de ces valeurs sous forme d'une seconde valeur discrète en octets de demi-ondes,
c) un second comparateur pour comparer, dans un intervalle d'évolution de la seconde courbe de demi-ondes de signaux (S2), les valeurs balayées de la seconde courbe de demi-ondes de signaux (S) avec la seconde valeur seuil (SW2) et pour envoyer :
les valeurs balayées de la seconde courbe de demi-ondes de signaux (S2) qui sont inférieures à la première valeur seuil (SW2) vers un second registre de valeurs de mesure (MR2) pour l'enregistrement de ces valeurs sous forme d'une première valeur discrète en octets de demi-ondes SW2 et
les valeurs balayées de la seconde courbe de demi-ondes de signaux (S2) qui sont supérieures à la seconde valeur seuil (SW2) au premier registre de valeurs de mesure (MR2) pour l'enregistrement de ces valeurs sous forme d'une seconde valeur discrète en octets de demi-ondes,
d) un premier registre de valeurs de mesure théoriques (MRthéol) pour l'enregistrement de valeurs de mesure théoriques pour les valeurs dans l'intervalle d'évolution de la première courbe de demi-ondes de signaux (S1) et un second registre de valeurs de mesure théoriques (MRthéo2) pour l'enregistrement de valeurs de mesure théoriques pour les valeurs dans la plage d'évolution de la seconde courbe de demi-ondes de signaux (S2), les registres de valeurs de mesure (MR1, MR2) et les registres de valeurs de mesure théoriques (MRthéo1, MRthéo2) ayant une longueur en octets égale,
e) au moins un élément pour la comparaison logique en vue de comparer respectivement les contenus du premier et du second registres de valeurs de mesure (MR1, MR2) avec les contenus du premier et du second registre de valeurs de mesure théoriques (MRthéo1, MRthéo2) avec les contenus du premier et du second et d'éditer une valeur différentielle à partir de cette comparaison, et
f) un comparateur de plage de tolérance pour la comparaison de la valeur différentielle avec une plage de tolérance prédéfinie et pour enregistrer et envoyer, sur la base de cette comparaison, chacun des points de référence (20) sous forme d'un point de référence idéal lorsque la valeur différentielle se situe dans une plage de tolérance prédéfinie.

2. Système linéaire de mesure de course (10) selon la revendication 1, dans lequel les points de référence (20) se présentent sous forme d'aimants permanents individuels dont la courbe respective de champ magnétique peut être balayée par le dispositif de balayage.

3. Système linéaire de mesure de course (10) selon la revendication 1, dans lequel les points de référence (20) se présentent sous forme de marquages optiques qui peuvent être balayée par le dispositif de balayage.

4. Système linéaire de mesure de course (10) selon une des revendications précédentes, dans lequel les valeurs de mesure théoriques sont basées sur au moins une simulation de détection d'erreurs.

5. Système linéaire de mesure de course (10) selon une des revendications précédentes, dans lequel respectivement le niveau de la première valeur seuil (SW1) et le niveau de la seconde valeur seuil (SW2) sont basés sur au moins une simulation de détection d'erreurs.

6. Système linéaire de mesure de course (10) selon une des revendications précédentes, qui est conçu pour prédéfinir le moment du balayage à un multiple de la valeur angulaire de 180° sur la base des points de référence.

7. Système linéaire de mesure de course (10) selon la revendication 6, qui est conçu pour interpoler le point de référence en cas de dérive de la valeur angulaire du point de balayage.

8. Procédé de détermination d'une position absolue d'un chariot le long d'un rail de roulement (12), comportant une graduation de référence (16) appliquée le long du rail de roulement (12) et un dispositif de balayage installé sur le chariot, le dispositif de balayage étant conçu pour balayer au moins un point de référence (20) le long de la graduation de référence (16), le point de référence (20) étant balayé sous forme d'une courbe de signaux sensiblement analogique (S) qui est composée d'une première et d'une seconde courbes de demi-ondes de signaux successives (S1, S2), comportant les étapes suivantes :
a) sauvegarde d'au moins une première valeur seuil (SW1) et d'une seconde valeur seuil (SW2), leurs niveaux étant réglés différemment les uns par rapport aux autres,
b) dans une plage d'évolution de la première courbe de demi-ondes de signaux (S1),
comparaison des valeurs balayées de la première courbe de demi-ondes de signaux (S1) avec la première valeur seuil (SW1) par un premier comparateur,
envoi des valeurs balayées de la première courbe de demi-ondes de signaux (S1) qui sont inférieures à la première valeur seuil (SW1) à un premier registre de valeurs de mesure (MR1) et enregistrement de ces valeurs sous forme d'une première valeur discrète en octets de demi-ondes SW1 et
envoi des valeurs balayées de la première courbe de demi-ondes de signaux (S1) qui sont supérieures à la première valeur seuil (SW1) au premier registre de valeurs de mesure (MR1) et enregistrement de ces valeurs sous forme d'une seconde valeur discrète en octets de demi-ondes SW1,
c) dans une plage d'évolution de la seconde courbe de demi-ondes de signaux (S2) :
comparaison des valeurs balayées de la seconde courbe de demi-ondes de signaux (S2) avec la seconde valeur seuil (SW2) par un second comparateur,
envoi des valeurs balayées de la seconde courbe de demi-ondes de signaux (S2) qui sont inférieures à la seconde valeur seuil (SW2) à un second registre de valeurs de mesure (MR2) et enregistrement de ces valeurs sous forme d'une première valeur discrète en octets de demi-ondes SW2,
envoi des valeurs balayées de la seconde courbe de demi-ondes de signaux (S2) qui sont supérieures à la seconde valeur seuil (SW2) au second registre de valeurs de mesure (MR2) et enregistrement de ces valeurs sous forme d'une seconde valeur discrète en octets de demi-ondes SW2,
d) enregistrement de valeurs de mesure théoriques pour les valeurs dans la plage d'évolution de la première courbe de demi-ondes de signaux (S1) et de valeurs de mesure théoriques pour les valeurs dans l'intervalle d'évolution de la seconde courbe de demi-ondes de signaux (S2) dans respectivement un premier et un second registres de valeurs de mesure théoriques (MRthéo1, MRthéo2), les registres de valeurs de mesure (MR1, MR2) et les registres de valeurs de mesure théoriques (MRthéo1, MRthéo2) ayant une longueur en octets égale,
e) comparaison respectivement des contenus du premier et du second registres de valeurs de mesure (MR1, MR2) avec les contenus du premier et du second registres de valeurs de mesure théoriques (MRthéo1, MRthéo2) par un élément de comparaison logique et édition d'une valeur différentielle à partir de cette comparaison, et
f) comparaison de la valeur différentielle avec une plage de tolérance prédéfinie par un comparateur de plage de tolérance et enregistrement et édition, sur la base de cette comparaison, de chacun des points de référence (20) sous forme d'un point de référence idéal lorsque la valeur différentielle se situe dans une plage de tolérance prédéfinie.

9. Procédé selon la revendication 8, dans lequel les points de référence (20) se présentent sous forme d'aimants permanents individuels dont la courbe respective de champ magnétique est balayée par le dispositif de balayage.

10. Procédé selon la revendication 8, dans lequel les points de référence (20) se présentent sous forme de marquages optiques qui sont balayée par le dispositif de balayage.

11. Procédé selon une des revendications 8 à 10, comprenant en outre l'étape suivante :
établissement des valeurs de mesure théoriques en se basant sur au moins une simulation de détection d'erreurs.

12. Procédé selon une des revendications 8 à 11, comprenant en outre l'étape suivante :
établissement respectivement du niveau de la première valeur seuil (SW1) et du niveau de la seconde valeur seuil (SW2) en se basant sur au moins une simulation de détection d'erreurs.

13. Procédé selon une des revendications 8 à 12, dans lequel le moment du balayage est prédéfini à un multiple de la valeur angulaire de 180° sur la base des points de référence.

14. Procédé selon la revendication 13, dans lequel le point de référence est interpolé en cas de dérive de la valeur angulaire du point de balayage.
